# DEMANDE DE BREVET EUROPEEN

(11) **EP 0 578 523 A1**
(43) Date de publication de la demande: **12.01.1994**
(21) Numéro de dépôt: 93401558.7
(22) Date de dépôt: 17.06.1993
(51) Int. Cl.: A23L 3/06, A23L 3/36

(54) **Installation de cuisson et de refroidissement en continu de produits alimentaires préconditionnés**

(30) Priorité: 10.07.1992 FR 9208956; 23.10.1992 FR 9213052
(71) Demandeur: SOCIETE DE CONSTRUCTIONS DE MATERIEL METALLIQUE ET ELECTRIQUE, F-38140 Renage (FR)
(72) Inventeur: Beizermann, Michel, F-38500 Voiron (FR)
(74) Mandataire: Bourgognon, Jean-Marie

(57) **Abrégé**

Elle comprend une enceinte de cuisson (1), une enceinte de réfrigération (2) ou de surgélation et un convoyeur (3) parcourant successivement l'enceinte de cuisson (1) sous la forme d'une spirale hélicoïdale ascendante (3) et l'enceinte de réfrigération (2) sous la forme d'une spirale hélicoïdale descendante (5). Industrie alimentaire.

## Description

La présente invention a pour objet une installation de cuisson et de refroidissement en continu de produits alimentaires préconditionnés.

Elle est destinée au traitement des produits en contenants ouverts ou obturés et, en particulier, des produits en barquettes équipées de valves thermofusibles.

Il est connu d'utiliser pour la cuisson ou la réfrigération des aliments en continu ou en discontinu divers équipements sous forme de" tunnels linéaires, de balancelles verticales ou horizontales, de convoyeurs horizontaux effectuant des aller-retour dans des enceintes chauffées et/ou réfrigérées. Ces dispositifs sont généralement encombrants et nécessitent des surfaces complémentaires de chargement et déchargement ainsi que des manipulations importantes, voire des systèmes additionnels de manutentions automatiques (U.S.-A-2.062.535).

L'installation selon la présente invention supprime ces inconvénients. En effet, grâce à deux enceintes séparées pour la cuisson et le refroidissement, elle permet d'éviter les attentes inutiles et le ralentissement de la production, qui sont le lot des appareils mono-enceinte dans lesquels on cuit puis on refroidit consécutivement les produits.

Elle est constituée par la combinaison de deux enceintes séparées et distinctes, la première destinée à la cuisson, la seconde au refroidissement rapide ou à la surgélation, et d'un convoyeur hélicoïdal parcourant successivement l'enceinte de cuisson sous la forme d'une spirale ascendante (ou descendante) et l'enceinte de la réfrigération sous la forme d'une spirale hélicoïdale descendante (ou ascendante), la sortie du convoyeur s'effectuant à la base de l'enceinte, de préférence au même niveau que l'entrée dans l'enceinte de cuisson.

La description détaillée ci-après se rapporte à un exemple non limitatif d'une des formes de réalisation de l'objet de l'invention, en se référant au dessin annexé.

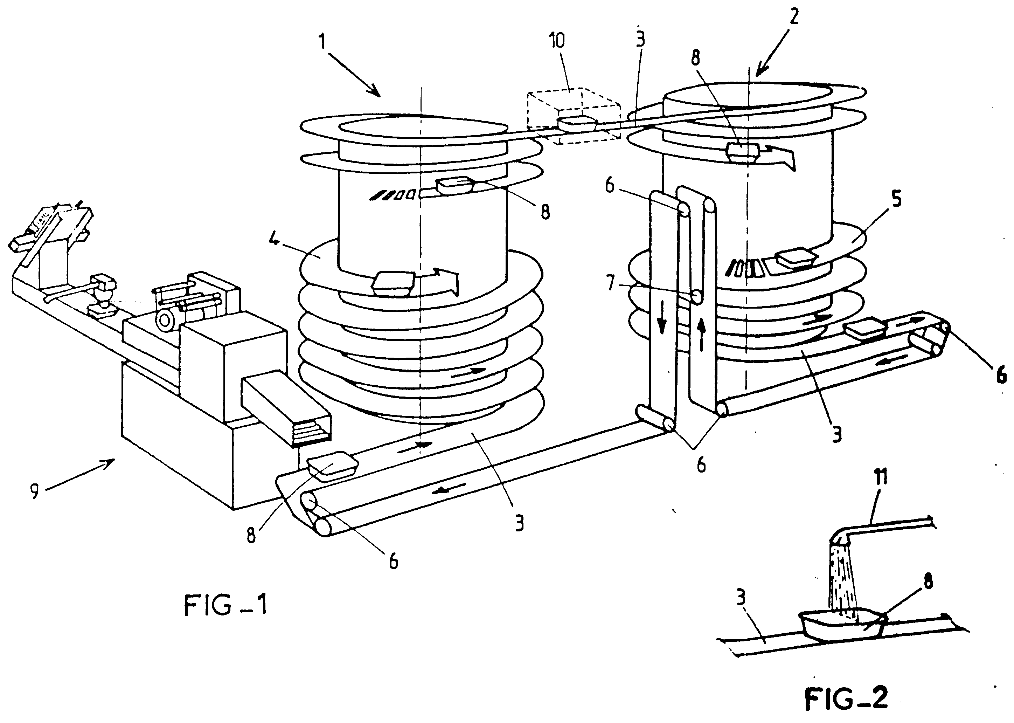

La figure 1 est un schéma de l'installation suivant l'invention, et
la figure 2 est un schéma du dispositif de refroidissement localisé.

Le dispositif est constitué d'une unité comportant deux enceintes 1, 2 séparées et distinctes, la première destinée à la cuisson, la seconde au refroidissement rapide ou à la surgélation.

Un convoyeur hélicoïdal 3 parcourt, sous la forme d'une spirale ascendante 4, la première enceinte de cuisson 1. L'entrée du convoyeur se situe à la base de l'enceinte, tandis que la sortie s'effectue à la partie supérieure.

Ce même convoyeur entre alors dans l'enceinte de réfrigération 2 par sa partie supérieure et parcourt celle-ci sous la forme d'une spirale hélicoïdale descendante 5. La sortie du convoyeur s'effectue à la base de l'enceinte, de préférence au même niveau que l'entrée dans l'enceinte de cuisson.

Le convoyeur est ramené à son point d'origine par un nombre suffisant de tambours de renvoi 6, après passage sur un dispositif de tension automatique 7.

Les barquettes 8 ou contenants sont déposées automatiquement sur le convoyeur hélicoïdal dès leur sortie de la ligne de remplissage et/ou d'operculage 9. Elles sont véhiculées sans autre manipulation au travers de la première enceinte de cuisson 1, puis dès la fin de la cuisson, elles traversent l'enceinte de réfrigération 2.

Au terme de ce double traitement, les barquettes 8 ou les contenants peuvent sortir directement en chambre froide de stockage, cette dernière opération pouvant s'effectuer également automatiquement par des convoyeurs à tapis ou à rouleaux motorisés ou non.

La partie horizontale du convoyeur 3, située entre la sortie de l'enceinte de cuisson 1 et l'entrée de l'enceinte de réfrigération 2, peut être de longueur variable selon l'espace disponible ou souhaité entre les deux enceintes.

Pour des impératifs d'implantation ou pour des raisons techniques de différences de dilatation, par exemple, le convoyeur unique d'une seule pièce peut avantageusement être remplacé par deux convoyeurs indépendants. Il devient alors possible d'installer les deux enceintes 1, 2 soit en ligne, soit à angle droit l'une par rapport à l'autre.

Dans le cas d'une utilisation de cuisson en barquettes à valves thermofusibles, il est possible et conseillé de faire passer la partie supérieure horizontale du ou des convoyeurs 3 située entre les deux enceintes dans un mini-tunnel réfrigéré 10. Ce dernier est destiné à figer instantanément les valves thermofusibles des barquettes avant la phase de réfrigération. Il comprend une buse 11 de projection d'air froid dont le jet est dirigé sur la partie supérieure de la barquette et, de préférence, sur toute la largeur du convoyeur. Seule la partie supérieure de la barquette est ainsi refroidie.

Suivant un autre mode de réalisation du dispositif de refroidissement localisé, car ne refroidissant pas les aliments à coeur, les barquettes peuvent également être plongées dans un bac d'eau froide ou réfrigérée, de forme rectangulaire, lui-même traversé par un mini-convoyeur, afin d'assurer la translation des barquettes dans l'eau froide. Ce dispositif assure le figement des valves thermofusibles, ainsi qu'un pré-refroidissement du contenu des barquettes par immersion.

L'enceinte de cuisson 1 peut être dotée d'un système à air chaud pulsé, d'un générateur de vapeur, d'un système mixte vapeur plus air pulsé. Elle peut fonctionner à l'électricité ou au gaz indifféremment sans que cela ne puisse remettre en cause l'objet de la présente invention.

L'enceinte de réfrigération 2 peut être réfrigérée indifféremment par un procédé mécanique : compresseur et évaporateur, ou par un procédé cryogénique : injection d'un gaz liquide azote (N₂L) ou anhydride carbonique (CO₂) sans que cela ne puisse remettre en cause l'objet de l'invention.

## Revendications

1. Installation de cuisson et de refroidissement en continu de produits alimentaires préconditionnés, destinée au traitement des produits en contenants ouverts ou obturés et, en particulier, des produits en barquettes équipées de valves thermofusibles,
caractérisée par la combinaison de deux enceintes séparées et distinctes, une enceinte de cuisson (1), une enceinte de réfrigération (2) ou de surgélation et d'un double convoyeur (3) parcourant successivement l'enceinte de cuisson (1) sous la forme d'une spirale hélicoïdale ascendante ou descendante (4) et l'enceinte de réfrigération (2) sous la forme d'une spirale hélicoïdale descendante ou ascendante (5).

2. Installation selon la revendication 1, caractérisée par le fait que la sortie du convoyeur (3) s'effectue à la base de l'enceinte de réfrigération (2), au même niveau que l'entrée dans l'enceinte de cuisson (1).

3. Installation selon l'une quelconque des revendications précédentes, caractérisée par le fait que le convoyeur (3) est ramené, grâce à des tambours de renvoi (6), depuis sa sortie de l'enceinte de réfrigération (2) à l'entrée dans l'enceinte de cuisson (1), après passage sur un dispositif de tension automatique (7).

4. Installation selon la revendication 1 ou 2, caractérisée par le fait que le convoyeur (3) est en deux parties indépendantes, de manière à pouvoir installer les deux enceintes (1, 2) soit en ligne, soit à angle droit l'une par rapport à l'autre.

5. Installation selon l'une quelconque des revendications précédentes, caractérisée par le fait que les barquettes (8) ou contenants sont déposées automatiquement sur le convoyeur (3) dès leur sortie de la ligne de remplissage et/ou d'operculage (9) et sont véhiculées sans manipulation au travers de l'enceinte de cuisson (1) puis, dès la fin de la cuisson, traversent l'enceinte de réfrigération (2).

6. Installation selon la revendication 5, caractérisée par le fait que, après cuisson et refroidissement, les barquettes (8) ou contenants sortent directement en chambre froide de stockage, cette opération s'effectuant également automatiquement grâce à des convoyeurs à tapis ou à rouleaux motorisés ou non.

7. Installation selon l'une quelconque des revendications précédentes, caractérisée par un dispositif de refroidissement (10) localisé de la partie supérieure des barquettes, interposé entre les deux enceintes (1, 2).

8. Installation suivant la revendication 7, caractérisée en ce que le dispositif (10) est disposé sur une partie horizontale du convoyeur.

9. Installation suivant l'une des revendications 7 ou 8, caractérisée en ce que le dispositif comprend une buse de projection d'air froid, dont le jet est dirigé sur la partie supérieure d'une barquette se trouvant sur le convoyeur.

10. Installation suivant la revendication 9, caractérisée en ce que le jet s'étend sur toute la largeur du convoyeur.
